(19) **Europäisches Patentamt / European Patent Office / Office européen des brevets**

(11) **EP 3 187 821 B1**

(12) **EUROPEAN PATENT SPECIFICATION**

(45) Date of publication and mention
of the grant of the patent:
**22.08.2018 Bulletin 2018/34**

(21) Application number: **16205942.2**

(22) Date of filing: **21.12.2016**

(51) Int Cl.:
*G01B 11/16* (2006.01)    *G01D 5/353* (2006.01)
*G01L 1/24* (2006.01)

(54) **A DATA PROCESSOR AND A DATA PROCESSING METHOD**

DATENPROZESSOR UND DATENVERARBEITUNGSVERFAHREN

PROCESSEUR DE DONNÉES ET PROCÉDÉ DE TRAITEMENT DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2015 JP 2015256344**

(43) Date of publication of application:
**05.07.2017 Bulletin 2017/27**

(73) Proprietor: **Yokogawa Electric Corporation
Tokyo 180-8750 (JP)**

(72) Inventors:
• **Imai, Michio**
  **Tokyo (JP)**
• **Miura, Satoru**
  **Tokyo (JP)**
• **Nimura, Arinori**
  **Tokyo (JP)**
• **Matsuura, Satoshi**
  **Tokyo, 180-8750 (JP)**
• **Furukawa, Osamu**
  **Tokyo, 180-8750 (JP)**

(74) Representative: **Henkel, Breuer & Partner
Patentanwälte
Maximiliansplatz 21
80333 München (DE)**

(56) References cited:
**US-A1- 2008 145 049     US-A1- 2010 040 108**

• **IMAI M ET AL: "Highly dense strain measurement
of concrete retrofitted with smart fabric",
NONDESTRUCTIVE CHARACTERIZATION FOR
COMPOSITE MATERIALS, AEROSPACE
ENGINEERING, CIVIL INFRASTRUCTURE, AND
HOMELAND SECURITY 2011, SPIE, 1000 20TH
ST. BELLINGHAM WA 98225-6705 USA, vol. 7983,
no. 1, 24 March 2011 (2011-03-24), pages 1-15,
XP060011251, DOI: 10.1117/12.878394 [retrieved
on 1901-01-01]**

EP 3 187 821 B1

**Description**

BACKGROUND OF THE INVENTION

Field of the Invention

The embodiments of the present invention relate to a data processor and a data processing method for processing strain distribution data which is measured by a distributed optical fiber sensor.

Priority is claimed on Japanese Patent Application No. 2015-256344, filed on December 28, 2015.

Description of the Related Art

A Fiber Bragg Grating (FBG) sensor is generally used in the field of an optical fiber sensing for measuring a strain by using an optical fiber sensor. The FBG sensor is disclosed in, for example, Non-Patent Document "The Optical Fiber Sensors Guide - Fundamentals & Applications -, Micron Optics" which is available at http://www.micronoptics.com/wp-content/uploads/2015/06/Updated Optical Fiber Se nsors Guide 130529.pdf. The FBG sensor is the sensor in which plural FBG elements (a diffraction grating) are formed inside a core of the optical fiber. The strain of the position where the FBG elements are formed in the optical fiber can be measured by analyzing an optical spectrum of a reflected beam of light of a Bragg wavelength inside the optical fiber by using the FBG sensor. The FBG sensor is referred to as a quasi-distributed optical fiber sensor.

The FBG elements are discretized in the FBG sensor, and the position of the FBG element cannot be changed by workers. Therefore, the strain distribution data at an arbitrary position cannot be acquired with the FBG sensor.

In contrast, a set of strain distribution data can be acquired with the distributed optical fiber sensor using such as the Brillouin scattering phenomenon by measuring the strain at each position while switching (with random access) the position to be measured. Such the optical fiber sensor is referred to as a random access optical fiber sensor.

The random access optical fiber sensor can measure the strain at only one point of position at a certain point of time. It means the strain distribution data of each point acquired by the random access optical fiber sensor has mutually different measured times. Thus, the random access optical fiber sensor is not used to observe the strain distribution at the same time. Furthermore, the random access optical fiber sensor is not used to observe the vibration mode of a measurement target even if a displacement of the measurement target is acquired from the measured strain.

The present invention relates to a data processor and a data processing method which is capable of acquiring strain distribution data at the same time.

US 2010/040108 A1 discloses a measuring method and a sensor unit of measuring temperature distribution of an object by using an optical fiber sensing technology of BOCDA system. In the measuring method, an optical fiber that functions as a BOCDA-type optical fiber sensor is disposed two-dimensionally or three-dimensionally with respect to a predetermined measurement region of the object.

IMAI M et al: "Highly dense strain measurement of concrete retrofitted with smart fabric", NONDESTRUCTIVE CHARACTERIZATION FOR COMPOSITE MATERIALS, AEROSPACE ENGINEERING, CIVIL INFRASTRUCTURE, AND HOMELAND SECURITY 2011, SPIE, 1000 20TH ST. BELLINGHAM WA 98225-6705 USA, vol. 7983, no. 1, 24 March 2011, pages 1-15 discloses an experimental study on cracked concrete specimen retrofitted with a ply of smart fabric, wherein a fiber optic sensor is woven into the fabric. The strain distribution along the sensing fiber is measured to detect the de-bonding of the smart fabric from the concrete specimen under loading.

US 2008/145049 A1 discloses an apparatus for measuring the characteristics of an optical fiber. An optical pulse generator generates, from a coherent light, first and second optical pulses having a time interval which is equal to or shorter than a life time of an acoustic wave in the optical fiber. A detector couples the coherent light with a Brillouin backscattered light which includes first and second Brillouin backscattered lights belonging to the first and second optical pulses respectively, thereby generating an optical signal. The detector further converts the optical signal into an electrical signal. A signal processor takes the sum of the electrical signal and a delay electrical signal which is delayed from the electrical signal by a delay time corresponding to the time interval, thereby generating an interference signal, and finds the characteristics of the optical fiber based on the interference signal.

SUMMARY

According to the present invention, there is provided a data processor as set out in independent claim 1, and a data processing method as set out in independent claim 2.

In the data processor according to the aspect of the present invention, the interpolator is for calculating the strain at the set of positions of the optical fiber at the same time by interpolating the times and the positions of the strain distribution data acquired by the acquirer.

The data processing method according to the aspect of the present invention comprises acquiring strain distribution data in which a distributed optical fiber sensor measures a strain at a set of positions of an optical fiber at different times; and calculating the strains at the set of positions of the optical fiber at the same time by interpolating positions and times of the strain distribution data.

According to the present invention, the strain distribution data are acquired in the same or identical time.

BRIEF DESCRIPTION OF THE DRAWINGS

FIG. 1 is a schematic configuration diagram showing a data processor according to an embodiment of the present invention.
FIG. 2 is a schematic block diagram showing the data processor according to the embodiment of the present invention.
FIG. 3 is a diagram showing the strain distribution data acquired by using an optical fiber sensor in the data processor according to the embodiment of the present invention.
FIG. 4 is a diagram showing the strain distribution data interpolated by an interpolator in the data processor according to the embodiment of the present invention.
FIG. 5A is a plan view showing an experimental device which is used in an example of the data processor according to the embodiment of the present invention.
FIG. 5B is a left side view showing the experimental device used in the example of the data processor according to the embodiment of the present invention.
FIG. 5C is a front view showing the experimental device used in the example of the data processor according to the embodiment of the present invention.
FIG. 6A is a plan view showing a beam member of the experimental device used in the example of the data processor according to the embodiment of the present invention.
FIG. 6B is a bottom view showing the beam member of the experimental device used in the example of the data processor according to the embodiment of the present invention.
FIG. 7 is a diagram showing the strain distribution data acquired by measuring the strain of the beam member under conditions 1 by strain gauges attached to the beam member.
FIG. 8 is a diagram showing a temporal change of the strain at 0m point in the strain distribution data shown in FIG. 7.
FIG. 9 is a diagram showing the strain distribution data acquired by measuring the strain of the beam member under conditions 1 by the optical fiber sensor attached to the beam member in the data processor according to the embodiment of the present invention.
FIG. 10 is a diagram showing the temporal change of the strain at 0m point in the strain distribution data shown in FIG. 9 in the data processor according to the embodiment of the present invention.
FIG. 11 is a diagram showing the strain distribution data interpolated the strain distribution data at time and position acquired by the optical fiber sensor used in the data processor according to the embodiment of the present invention.
FIG. 12 is a diagram showing the temporal change of the strain at 0m point in the strain distribution data shown in FIG. 11 in the data processor according to the embodiment of the present invention.
FIG. 13A is a diagram showing a comparison result of the measured strain distribution data of the strain gauge in conditions 1.
FIG. 13B is a diagram showing the comparison result of the measured strain distribution data of the optical fiber sensor in the conditions 1 in the data processor according to the embodiment of the present invention.
FIG. 13C is a diagram showing the comparison result of the interpolated strain distribution data of the optical fiber sensor in the conditions 1 in the data processor according to the embodiment of the present invention.
FIG. 14A is a diagram showing the comparison result of the measured strain distribution data of the strain gauge in conditions 2.
FIG. 14B is a diagram showing the comparison result of the measured strain distribution data of the optical fiber sensor in the conditions 2 in the data processor according to the embodiment of the present invention.
FIG. 14C is a diagram showing the comparison result of the interpolated strain distribution data of the optical fiber sensor in the conditions 2 in the data processor according to the embodiment of the present invention.
FIG. 15A is a diagram showing the comparison result of the measured strain distribution data of the strain gauge in conditions 3.
FIG. 15B is a diagram showing the comparison result of the measured strain distribution data of the optical fiber sensor in the conditions 3 in the data processor according to the embodiment of the present invention.
FIG. 15C is a diagram showing the comparison result of the interpolated strain distribution data of the optical fiber sensor in the conditions 3 in the data processor according to the embodiment of the present invention.
FIG. 16A is a diagram showing the comparison result of the measured strain distribution data of the strain gauge in conditions 4.

FIG. 16B is a diagram showing the comparison result of the measured strain distribution data of the optical fiber sensor in the conditions 4 in the data processor according to the embodiment of the present invention.

FIG. 16C is a diagram showing the comparison result of the interpolated strain distribution data of the optical fiber sensor in the conditions 4 in the data processor according to the embodiment of the present invention.

FIG. 17 is a diagram showing the comparison result between the measured strain distribution data of the strain gauge and the interpolated strain distribution data of the optical fiber sensor in the data processor according to the embodiment of the present invention in each vibration cycle.

FIG. 18 is a diagram showing a correlation between the measured strain distribution data of the optical fiber sensor and the interpolated strain distribution data of the optical fiber sensor both in the data processor according to the embodiment of the present invention with respect to the measured strain distribution data of the strain gauges.

## DETAILED DESCRIPTION OF THE EMBODIMENTS

Hereinafter, a detailed description of a preferred embodiment of a data processor, a data processing method according to the present invention will be described in detail below with reference to the drawings. In all figures, the same reference numerals are attached to such as the same or corresponding configuration and the same or corresponding part.

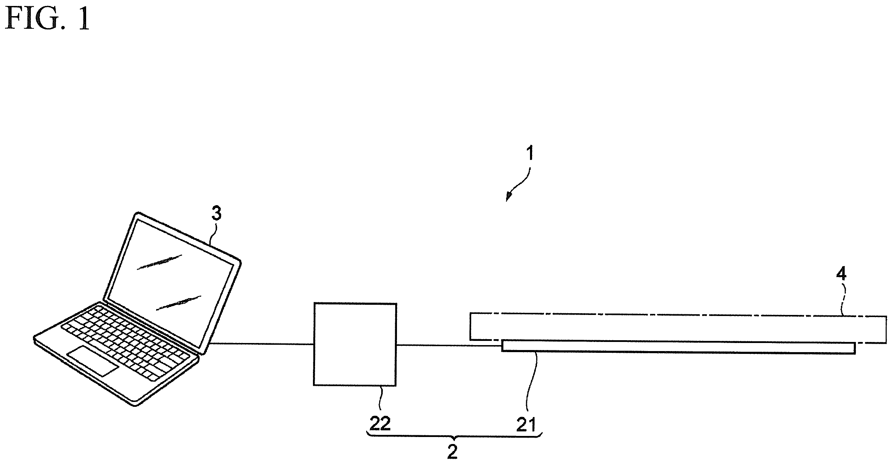

FIG. 1 is a schematic configuration diagram showing a data processor included in a data processor according to an embodiment of the present invention. As shown in FIG. 1, a data processor 1 includes an optical fiber sensor 2 and a strain distribution data processor 3.

The optical fiber sensor 2 measures a strain at plural positions of a measurement target 4 at mutually different times. The optical fiber sensor 2 is a distributed optical fiber sensor. The distributed optical fiber sensor 2 includes such as the BOCDA (Brillouin Optical Correlation Domain Analysis), the BOCDR (Brillouin Optical Correlation Domain Reflectometry), and the BOTDR (Brillouin Optical Time Domain Reflectometer) using the Brillouin scattering phenomenon. The BOCDA and the BOCDR are referred to as a random access optical fiber sensor, and are particularly suitable for the present embodiment. The optical fiber sensor 2 includes an optical fiber 21 and a measurer 22.

The optical fiber 21 is attached to the measurement target 4. The strain of the measurement target 4 occurs in the optical fiber 21 in a pseudo manner. The optical fiber 21 is preferably brought into close contact with the measurement target 4 and installed in a linear shape or a loop shape in order to improve a measurement sensitivity of the strain.

The measurer 22 measures a strain of the optical fiber 21. The measurer 22 measures a strain at the plural positions of the optical fiber 21 by using such as the stimulated Brillouin scattering phenomenon. It is known that the frequency difference between an incident beam of light and a Brillouin backscattering beam of light depends on a strain amount at where the stimulated Brillouin scattering beam of light generated. For example, using BOCDA to detect the frequency difference at a specific position, the measurer 22 generates the stimulated Brillouin scattering beam of light by the pump beam of light incident on the optical fiber 21, and modulates a frequency of the light source (not shown). The measurer 22 selects the stimulated Brillouin scattering beam of light at a specific position and observes the stimulated Brillouin scattering beam of light. Then, the measurer 22 detects the stimulated Brillouin scattering beam of light which is locally generated, and calculates the strain of the optical fiber 21 at the position where the stimulated Brillouin scattering beam of light is generated.

However, the measurer 22 can measure only one point of the strain at one time. Therefore, the measurer 22 continuously changes the position at which the stimulated Brillouin scattering is locally generated by changing the modulation frequency of the light source. According to the above operation, the measurer 22 can measure the strain distribution over the entire length of the optical fiber 21. That is, the optical fiber sensor 2 measures the strain of the plural positions of the optical fiber 21 at plural different times. As a result, it can be the acquired strain distribution data which is acquired by measuring the strains at the plural positions of the optical fiber 21 at the mutually plural different times. The strain distribution data is composed of the plural strain measurement values measured by the measurer 22. Specifically, the strain distribution data is composed of at least mutually different four or more strain measurement values acquired by measuring the strains of the two or more positions of the optical fiber 21 at the mutually different two or more times. In this case, if it is acquired the mutually different six or more strain measurement values which are acquired by measuring the strains at the two or more positions of the optical fiber 21 at the mutually different three or more times, it is suitable for observing the vibration mode of the measurement target 4 described below.

The strain distribution data processor 3 is constructed by a computer device such as a personal computer. The strain distribution data processor 3 is capable of connecting with the optical fiber sensor 2, and calculates the strain at the plural positions of the measurement target 4 at the same (identical) time based on the strain distribution data acquired from the optical fiber sensor 2.

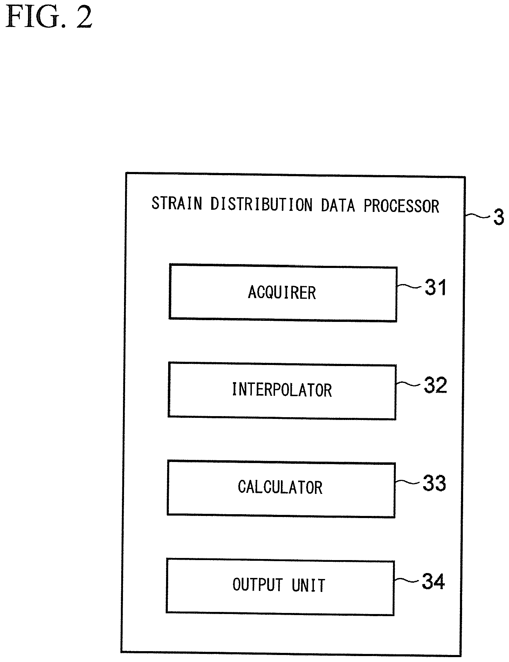

FIG. 2 is a schematic block diagram showing the strain distribution data processor 3. As shown in FIG. 2, the strain distribution data processor 3 includes an acquirer 31, an interpolator 32, a calculator 33, and an output unit 34.

The acquirer 31 acquires the strain distribution data of the optical fiber 21 acquired by the optical fiber sensor 2. Then, the acquirer 31 transmits the acquired strain distribution data to the interpolator 32.

The interpolator 32 calculates the strain of the plural positions of the optical fiber 21 at the same time by the interpolation (a surface interpolation) of the time and the position of the strain distribution data acquired by the acquirer 31. This interpolation can be carried out by various known methods, for example, it can be carried out by following formula 1 or formula 2. The formula 1 is an Exact Method that interpolates so that the observation value is always passed, and the formula 2 is an Approximate Method that the observation value is not passed (Lam, Nina Siu-Ngan: "Spatial Interpolation Methods: A Review; The American Cartographer 10.2 (1983), pages 129-150). In the formula 1 and the formula 2, the "p" represents the strain, the "x" represents the position, the "y" represents the time, the "a" represents the coefficient, and the "z" represents the observed strain. In the formula 1 and the formula 2, the "N" is an integer of 2 or more, and preferably an integer of 3 or more.

[Formula 1]

$$p(x, y) = \sum_{i=0}^{N} \sum_{j=0}^{N} a_{ij} x^i y^j \quad \cdots (1)$$

[Formula 2]

$$\sum_{i=0}^{N} \left( p\left(x^i, y^i\right) - z^i \right)^2 = \min. \quad \cdots (2)$$

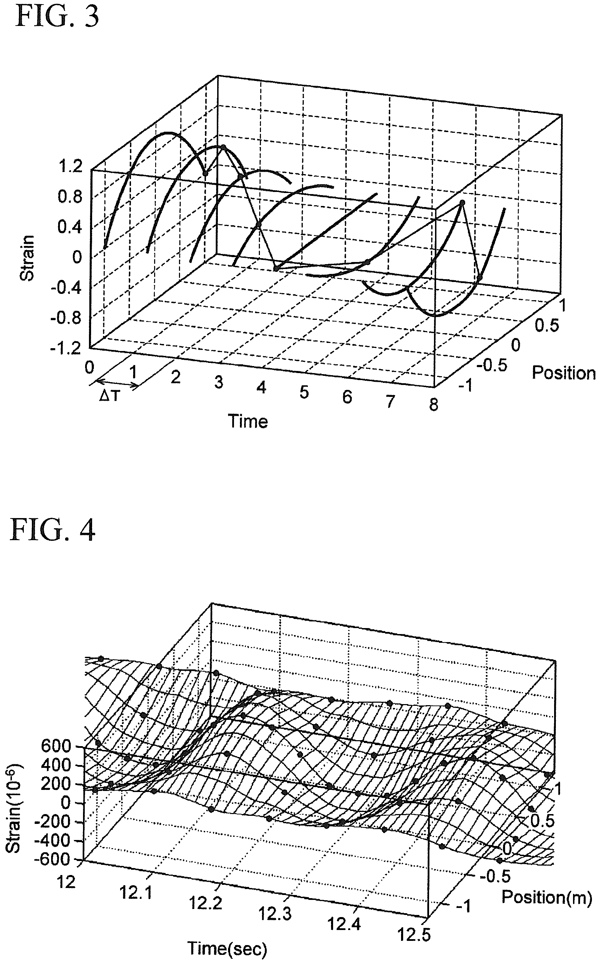

Hereinafter, an interpolation processing by the interpolator 32 will be described with reference to FIG. 3 and FIG. 4.

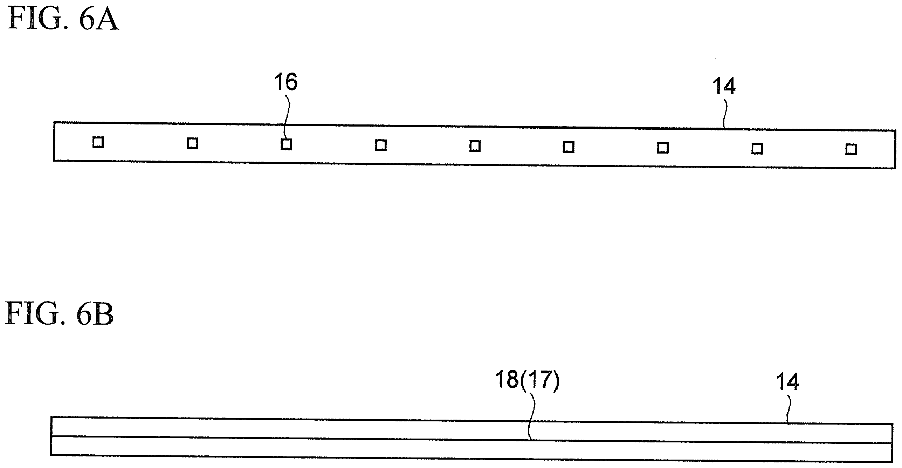

FIG. 3 is a diagram showing the strain distribution data acquired by the optical fiber sensor 2. In FIG. 3, the thick line represents the actual strain which is occurring in the optical fiber 21 measured by a strain gauge 16 shown in FIG. 6, and the black dot represents the strain distribution data acquired by the optical fiber sensor. In FIG. 3, the black dots as the strain distribution data are connected by thin lines. FIG. 4 is a diagram showing the strain distribution data interpolated by the interpolator.

As shown in FIG. 3, however the strain distribution data acquired by the optical fiber sensor 2 is a strain measurement value which is measured at the plural positions, neither strain measurement value is synchronized, and is measured at the mutually different times. For this reason, it cannot observe the measured strain values at the plural positions at a certain time. In other words, the strain distribution data of the optical fiber 21 acquired by the optical fiber sensor 2 is different from the state of the strain of the optical fiber 21 at a specific time.

Therefore, the interpolator 32 calculates or acquires the strain (the distribution of strain) of the optical fiber 21 at every predetermined time interval and at every predetermined position by interpolating the strain distribution data acquired by the acquirer 31 in terms of the time and the position (a time axis direction and/or a position axis direction). The interpolator 32 calculates the strain of the mutually different plural positions of the optical fiber 21 at the same time (hereinafter, including the meaning of the specific time). FIG. 4 shows data acquired by calculating the strain of the optical fiber 21 in every 14 millisecond and every 0.25m. The interpolated strain distribution data set can be expressed in a curved surface shown in FIG. 4.

Furthermore, the interpolator 32 calculates the strain at the mutually different plural times of the optical fiber 21 at the same position (hereinafter, including the meaning of the specific position) by interpolation (the surface interpolation) of the strain and the position of the strain distribution data of which the acquirer 31 acquired. This interpolation can be carried out by various known methods and can be carried out, for example, by the above formula 1 or formula 2.

The calculator 33 calculates the temporal change of the strain distribution of the measurement target 4 having the optical fiber 21 attached thereto from the strain distribution data (interpolated strain distribution data) generated or interpolated by the interpolator 32. As described above, the interpolator 32 interpolates the strain distribution data at the plural positions and the mutually different plural times of the measurement target 4. The calculator 33 calculates the temporal change of the strain distribution of the measurement target 4 from the strain distribution data. The temporal change of the strain distribution of the measurement target 4 can be represented by, for example, the natural frequency of the measurement target 4 and the vibration mode of the measurement target 4. The natural frequency and the vibration mode can be calculated by a well-known method.

The output unit 34 outputs the strain at the mutually different plural positions at the same time of the optical fiber 21 and the strain at the mutually different plural times at the same position of the optical fiber 21 as the strain distribution data. That is, the output unit 34 outputs the strain distribution data generated or interpolated by the interpolator 32 (see FIG. 3). The output form of the output unit 34 is not limited to the present embodiment. For example, the strain distribution data may be output as image from a display device. The strain distribution data may be output as a character from a printer. Further, the output unit 34 may output the temporal change and positional data of the measurement target 4 calculated by the calculator 33 as the strain distribution data.

Next, a strain distribution data processing method will be described.

First, in the measuring step S1, the measurer 22 measures the strain at the plural positions of the optical fiber 21 at the mutually different plural times. The optical fiber sensor 2 acquires the strain distribution data acquired by measuring the strain at the plural positions of the optical fiber 21 at the mutually different plural times.

Next, in the acquiring step S2, the acquirer 31 acquires the strain distribution data acquired in the measuring step S1. In other words, the acquirer 31 acquires the strain distribution data in which the optical fiber sensor 2 measures the strain at the plural positions of the optical fiber 21 at the mutually different plural times respectively.

Next, in the interpolating step S3, the interpolator 32 interpolates the strain distribution data acquired in the acquiring step S2 in the time direction and in the position direction, and calculates the strain at the mutually different plural positions of the optical fiber 21 at the same time. Furthermore, the interpolator 32 interpolates the strain distribution data acquired in the acquisition step S2 in the time direction and in the position direction, and calculates the strain at the mutually different plural times of the optical fiber 21 at the same position.

Next, in the calculating step S4, the calculator 33 calculates the temporal change or the positional change of the strain distribution of the measurement target 4 based on the strain distribution data generated or interpolated in the interpolating step S3.

Next, in the outputting step S5, the output unit 34 outputs the strain of the mutually different plural positions at the same time of the optical fiber 21 calculated in the interpolating step S3 and the strain at the mutually different plural times at the same position of the optical fiber 21 calculated in the interpolating step S3. In the outputting step S5, it may output the temporal change or the positional change of the strain distribution of the measurement target 4 which is calculated in the calculating step S4.

As described above, in the present embodiment, the distributed optical fiber sensor 2 measures the strain at the plural positions of the optical fiber 21 at the mutually different plural times, and the acquirer 31 acquires the strain distribution data based on the data of the strain. The interpolator 32 calculates the strain at the mutually different plural positions of the optical fiber 21 at the same time by interpolating the strain distribution data in the time direction and in the position direction. Thus, it is possible to acquire the strain distribution data at the plural positions of the optical fiber 21 at the same time. Further, it is possible to acquire the strain distribution data at the same time of the measurement target 4 by attaching the one or more optical fibers 21 to one or more positions of the measurement target 4. As a result, it is possible to observe the strain distribution of the measurement target 4 at the same time. In this case, it is possible to observe the vibration mode of the measurement target 4 by calculating the displacement from the strain.

The interpolator 32 interpolates the strain distribution data in the position direction and the time direction, and calculates the strain at the mutually different plural times at the same position of the optical fiber 21. The interpolator 32 can acquire the temporal change of the strain at the same position of the optical fiber 21. The interpolator 32 can acquire the temporal change of the strain at the same position of the measurement target 4 by attaching the one or more optical fibers 21 to plural points of the measurement target 4.

The calculator 33 calculates the temporal change of the strain distribution of the measurement target 4 from the strain distribution data generated or interpolated by the interpolator 32. The worker can easily observe such as the vibration mode of the measurement target 4.

The output unit 34 outputs the strain distribution data calculated by the interpolator 32. The worker can easily observe the strain distribution data at the same time of the measurement target 4 and the temporal change of the strain at the same position. The output unit 34 outputs the displacement calculated from the strain. The worker can easily observe the vibration mode of the measurement target 4.

Although preferred embodiments of the present invention have been described above, the present invention is not limited to the above-described embodiments.

<Example>

Next, examples of a data processor according to the present invention will be described. However, the present invention is not limited to the following examples.

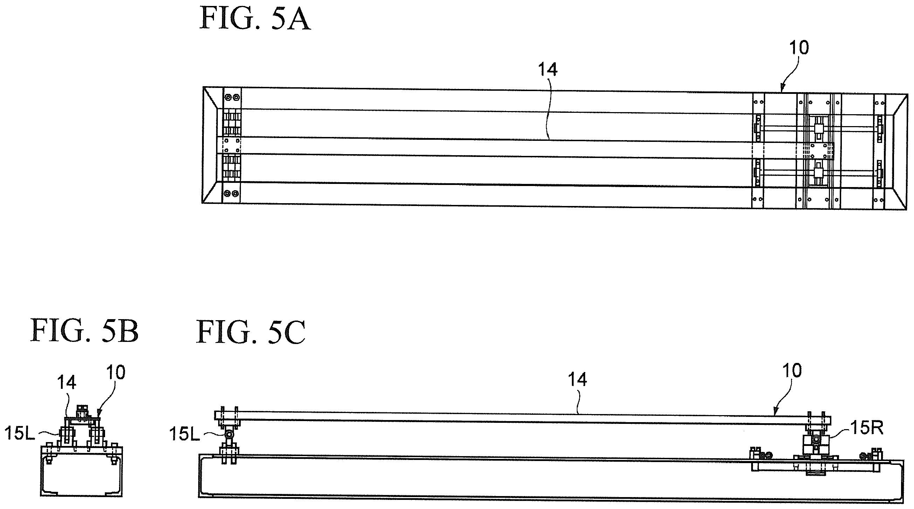

FIG. 5A is a plan view, FIG. 5B is a left side view, and FIG. 5C is a front view of the experimental device according to the example of the data processor. As shown in FIG. 5, it is used an elongated beam member 14 made of duralumin as a measurement target in the experiment by the experimental apparatus 10 or the experimental device 10. The length of the beam member 14 (the dimension in the lateral direction in FIG. 5A) is 2.1m, the width of the beam member 14 (the dimension in the vertical direction in FIG. 5A) is 32mm, and the thickness of the beam member 14 (the dimension in the vertical direction in FIG. 5C) is 6mm. The right end portion of the beam member 14 in the major axis direction is supported by the right support portion 15R. The left end portion of the beam member 14 in the longitudinal direction is supported by the left support portion 15L. The interval between the right support portion 15R and the left support portion 15L is 2.0m.

FIG. 6 is a view showing the beam member 14. FIG. 6A is a plan view, and FIG. 6B is a bottom view. As shown in FIG. 5 and FIG. 6, nine strain gauges 16 are attached to the upper surface of the beam member 14 at intervals of 0.25m. More specifically, the center position in the longitudinal direction of the beam member 14 is set as the 0m point, the right support portion 15R side from the 0m point is the positive (+) side, and the left support portion 15L side is the negative (-) side respectively. Then, the strain gauge 16 is installed at nine points reactively, which are the -1m point, the -0.75m point, the -0.50m point, the -0.25m point, the 0m point, the 0.25m point, the 0.50m point, the 0.75m point, and the 1m point respectively. An optical fiber 18 of the optical fiber sensor 17 is attached to the lower surface of the beam member 14 on a position facing the strain gauge 16 along the longitudinal direction of the beam member 14. The beam member 14 vibrates by changing the conditions of the right support portion 15R and the left support portion 15L as shown in a table 1, and by the central portion of the beam member 14 being pushed. The conditions in the table 1 are the conditions which are used when reproducing the situation of which the support portion (the right support portion 15R and the left support portion 15L) of the bridge model among the bridge models are deteriorating when the beam member 14 is used as a bridge model in accordance with proceeding from the conditions 1 to the conditions 4.

[Table 1]

|  | left support portion | | right support portion | |
|---|---|---|---|---|
|  | rotating | horizontal moving | rotating | horizontal moving |
| conditions 1 | free | fixed | free | free |
| conditions 2 | free | fixed | free | spring buffer |
| conditions 3 | free | fixed | free | fixed |
| conditions 4 | free | fixed | fixed | fixed |

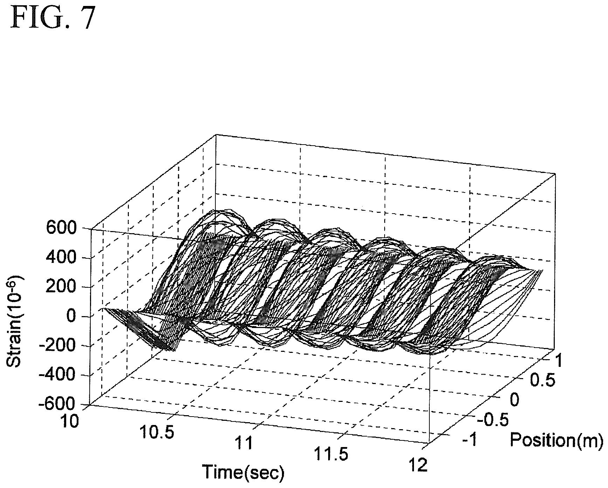

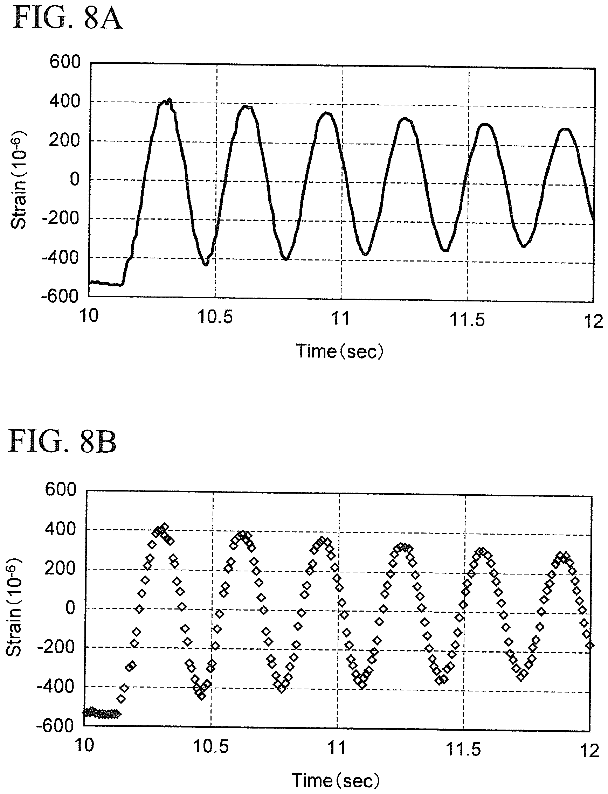

The strain is measured by each strain gauge 16 at a rate of 200 Hz synchronously. Distribution data of the measurement value is referred to as measured strain distribution data of the strain gauge 16. FIG. 7 shows the measured strain distribution data of the strain gauge 16 under the conditions 1. FIG. 8 shows the temporal change of the strain at the 0m point shown in FIG. 7. FIG. 8A shows the measured strain distribution data of which the strains measured in the time axis direction at the 0m point connected by a line. FIG. 8B shows the measured strain distribution data of which the strains measured in the time axis direction at the 0m point represented by a set of points.

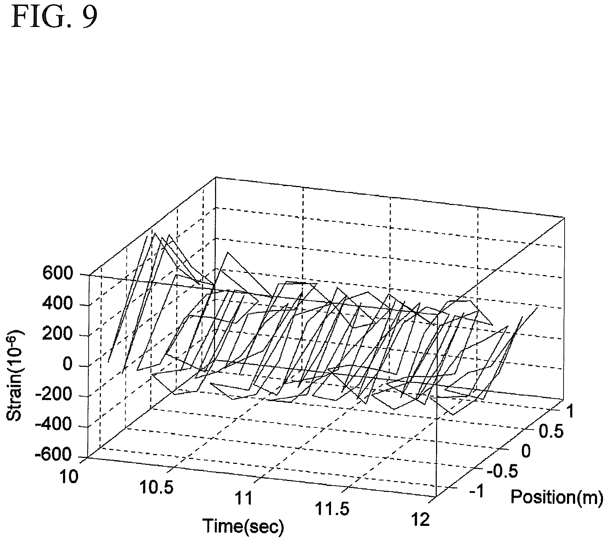

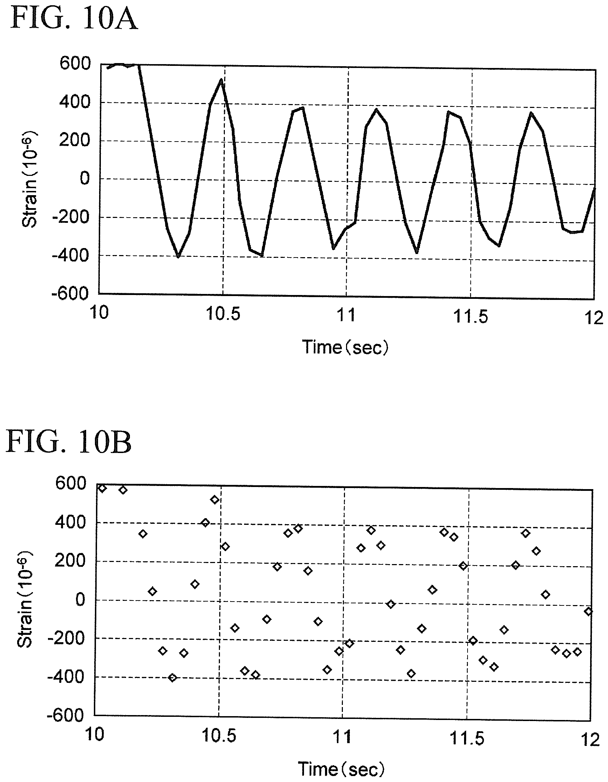

The strain at the position corresponding to each strain gauge 16 was measured while traveling the positions at a rate of 70Hz by using the optical fiber sensor 17 simultaneously. The distribution data of the measurement value is referred to as a measured strain distribution data of the optical fiber sensor 17. FIG. 9 shows the measured strain distribution data of the optical fiber sensor 17 under the conditions 1 in the table 1. Since the strain gauge 16 and the optical fiber 18 are respectively attached to the opposite surfaces with respect to the beam member 14, the sign of the measured strain distribution data of the strain gauge 16 and the sign of the measured strain distribution data of the optical fiber sensor 17 are opposite to each other. FIG. 10 shows the temporal change of the strain at the 0m point shown in FIG. 9. FIG. 10A shows the measured strain distribution data in which the strain measured in the time axis direction at the 0m point connected by a line, and FIG. 10B shows the measured strain distribution data in which the strain measured strain measured in the time axis direction at the 0m point shown as a set of points.

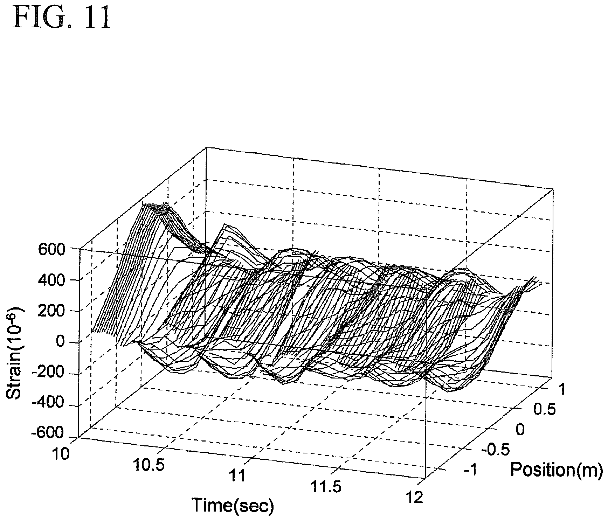

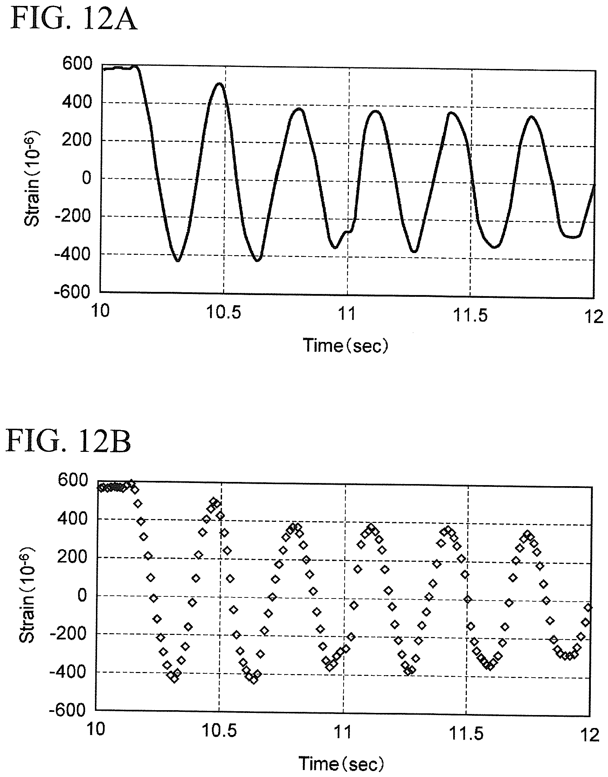

The strain at the position corresponding to each strain gauge 16 of the optical fiber 18 at the same time is calculated by interpolating the strain distribution data acquired by the optical fiber sensor 17 in the time direction and the position direction. The calculated strain distribution data is referred to as interpolated strain distribution data of the optical fiber sensor 17. FIG. 11 shows the interpolated strain distribution data of the optical fiber sensor 17 under the conditions 1 in the table 1. FIG. 12 shows the temporal change of the strain at the 0m point shown in FIG. 11. FIG. 12A shows the measured strain distribution data in which the strains calculated in the time axis direction connected by lines, and FIG. 12B shows the measured strain distribution data in which the strains calculated in the time axis direction represented as a set of points.

As shown in FIG. 7, the measured strain distribution data of the strain gauge 16 is the strain distribution data in which the strain is measured at each position of the beam member 14 at the same time. Therefore, it is possible to observe the strain distribution at the same time of the beam member 14, and to observe the temporal change of the strain of the entire beam member 14.

On the other hand, as shown in FIG. 9, the measured strain distribution data of the optical fiber sensor 17 is discrete strain distribution data acquired by measuring the strain at each position of the beam member 14 at mutually different plural times. Therefore, it is impossible to observe the strain distribution of the beam member 14 at the same time, and the temporal change of the strain of the entire beam member 14 cannot be observed.

As shown in FIG. 11, the interpolated strain distribution data of the optical fiber sensor 17 is the strain distribution data of which the strain at each position of the beam member 14 at the same time is calculated by interpolation. Therefore, it is possible to observe the strain distribution of the beam member 14 at the same time, and to observe the temporal change of the strain of the entire beam member 14 similarly to the measured strain distribution data of the strain gauge 16.

As shown in FIG. 8A and FIG. 8B, since the measured strain distribution data of the strain gauge 16 is measured the strain of the beam member 14 at the same position at all measurement times, it is possible to accurately observe the temporal change of the strain at the same position.

On the other hand, as shown in FIG. 10A and FIG. 10B, since the measured strain distribution data of the optical fiber sensor 17 is not the data which is acquired by measuring the strain at the same position at all measurement times, it is impossible to accurately observe the temporal change of the strain at the same position in compared with the measured strain distribution data of the strain gauge 16 (see FIG. 8A, and FIG. 8B). In particular, as shown in Fig. 10B, it is impossible to observe the temporal change of the strain at the same point since the measurement points are shown as dispersed if the measured strain is represented by a set of points instead of a connected line.

As shown in FIG. 12A and FIG. 12B, since the interpolated strain distribution data of the optical fiber sensor 17 is calculated by interpolating the strain of each position of the beam member 14 at the same time, it can be observed the temporal change of the strain at the same position more accurately than the measured strain distribution data of the fiber sensor 17.

Next, the table 2 shows the compared result acquired by comparing the natural frequency of the beam member 14 calculated based on the measured strain distribution data of the strain gauge 16 and the natural vibration of the beam member 14 calculated based on the interpolated strain distribution data of the optical fiber sensor 17. The comparison result shows the natural vibration of the beam member 14 in 10 seconds after the beam member 14 was vibrated. The natural vibration of the beam member 14 corresponds to the temporal change of the strain of the entire beam member 14.

[Table 2]

| | the natural vibration based on the measured strain distribution data of the strain gauge [Hz] | the natural vibration based on the measured strain distribution data of the optical fiber sensor [Hz] | a margin of error [%] |
|---|---|---|---|
| conditions 1 | 3.125 | 3.162 | 1.18 |
| conditions 2 | 5.078 | 5.022 | 1.10 |
| conditions 3 | 5.078 | 5.022 | 1.08 |
| conditions 4 | 6.836 | 6.882 | 0.67 |

As shown in the table 2, the value of the natural vibration of the beam member 14 calculated based on the measured strain distribution data of the strain gauge 16 is same in the conditions 2 and in the conditions 3, and the value of the natural vibration of the beam member 14 calculated based on the interpolated strain distribution of the optical fiber sensor 17 is same in the conditions 2 and in the conditions 3. For this reason, it is difficult to distinguish the conditions 2 from the conditions 3 by the natural vibration. However, the value of the natural vibration of the beam member 14 calculated based on the measured strain distribution data of the strain gauge 16 and the value of the natural vibration of the beam member 14 calculated based on the interpolated strain distribution data of the optical fiber sensor 17 are very close together under all conditions. Therefore, it is understood that the interpolated strain distribution data of the optical fiber sensor 17 has sufficient accuracy as the parameter representing the change in the natural vibration.

A table 3 shows the compared result acquired by comparing a damping ratio of the beam member 14 calculated based on the measured strain distribution data of the strain gauge 16 and the damping ratio of the beam member 14 calculated based on the interpolated strain distribution data of the optical fiber sensor 17. The comparison result shows the damping ratio of the beam member 14 in 10 seconds after the beam member 14 was vibrated.

[Table 3]

|  | the damping ratio based on the measured strain distribution data of the strain gauge [Hz] | the damping ratio based on the measured strain distribution data of the optical fiber sensor [Hz] | a margin of error [%] |
|---|---|---|---|
| conditions 1 | 5.69 | 5.57 | 2.11 |
| conditions 2 | 4.13 | 4.32 | 4.60 |
| conditions 3 | 4.19 | 3.64 | 13.12 |
| conditions 4 | 3.86 | 3.27 | 15.28 |

As shown in the table 3, the damping ratio of the beam member 14 calculated based on the measured strain distribution data of the strain gauge 16 and the damping ratio of the beam member 14 calculated based on the interpolated strain distribution data of the optical fiber sensor 17 goes away as the conditions progresses from the conditions 1 to the conditions 4. However, as described above, since this condition reproduces the situation where the bridge model deteriorates according to the conditions 1 go to the conditions 4, it is possible to estimate the chronological change tendency of the damping ratio in the bridge model from this comparison result.

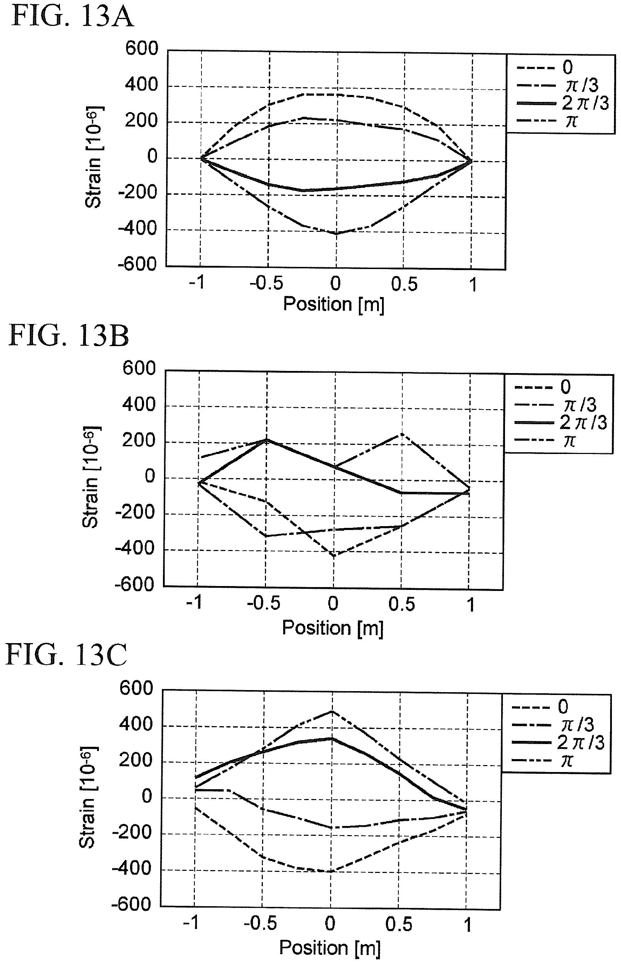

Next, FIGS. 13 to 16 show the compared results which compare the measured strain distribution data of the strain gauge 16, the measured strain distribution data of the optical fiber sensor 17, and the interpolated strain distribution data of the optical fiber sensor 17 under each of conditions. In these figures, the strain of the beam member 14 at the vibration periods of 0, $\pi/3$, $2\pi/3$, and $\pi$ were compared.

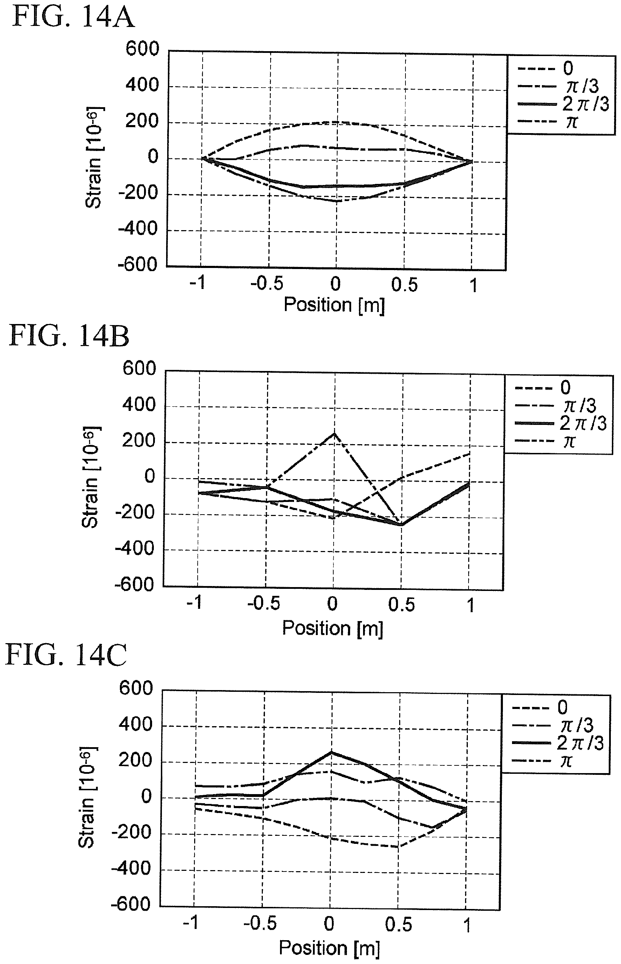

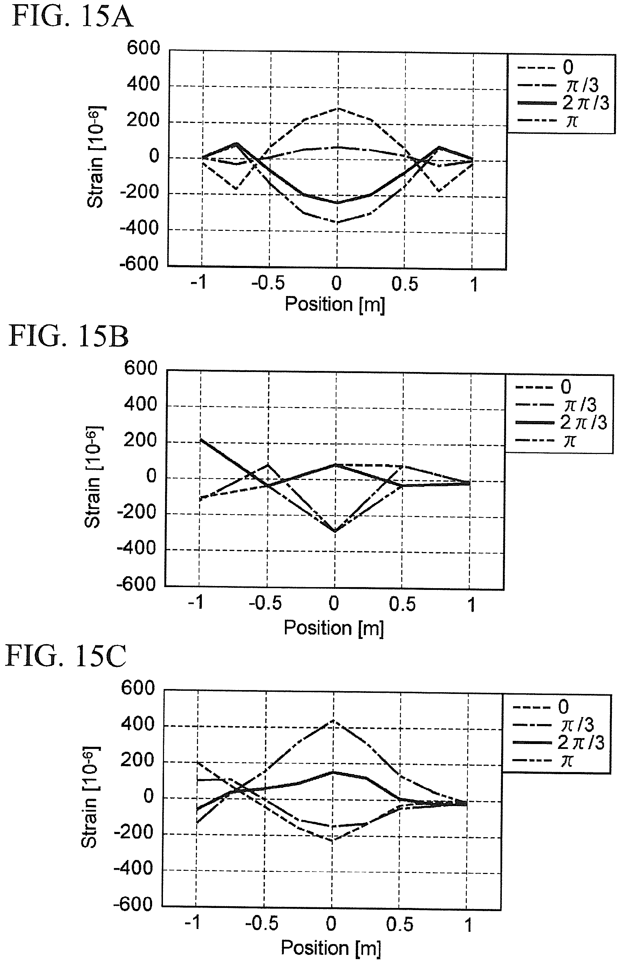

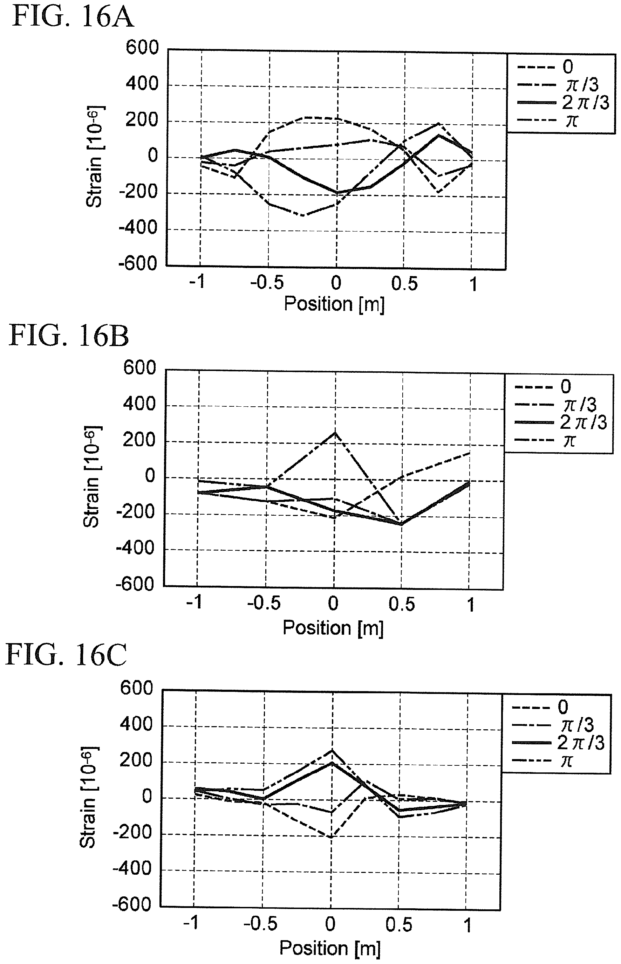

FIG. 13 is a diagram showing a compared result in the conditions 1. FIG. 14 is a diagram showing a compared result in the conditions 2. FIG. 15 is a diagram showing a compared result in the conditions 3. FIG. 16 is a diagram showing a compared result in the conditions 4. FIG. 13A, FIG. 14A, FIG. 15A, and FIG. 16A respectively show the measured strain distribution data of the strain gauge 16. FIG. 13B, FIG. 14B, FIG. 15B, and FIG. 16B respectively show the measured strain distribution data of the optical fiber sensor 17. FIG. 13C, FIG. 14C, FIG. 15C, and FIG. 16C respectively show the interpolated strain distribution data of the optical fiber sensor 17. Since the optical fiber sensor 17 can measure the strain at only one point at a certain time, the previous measured value remains unchanged except for the values measured at the 0, $\pi/3$, $2\pi/3$, and $\pi$ in the FIG. 13B, FIG. 14B, FIG. 15B and FIG. 16B.

As shown in FIGS. 13A, 14A, 15A and 16A, it is possible to observe the strain distribution at the same time of the beam member 14 and to observe the temporal change of the strain of the entire beam member 14 based on the measured strain distribution data of the strain gauge 16 under any conditions.

On the other hand, as shown in FIGS. 13B, 14B, 15B and 16B, the measured strain distribution data of the optical fiber sensor 17 is very different from the measured strain distribution data of the strain gauge 16. Therefore, it is impossible to observe the strain distribution of the beam member 14 at the same time and to observe the temporal change of the strain of the entire beam member 14 in any conditions.

Then, as shown in FIGS. 13C, 14C, 15C and 16C, the interpolated strain distribution data of the optical fiber sensor 17 is close to the measured strain distribution data of the strain gauge 16. Therefore, it is possible to observe the strain distribution of the beam member 14 at the same time, and to observe the temporal change of the strain of the entire beam member 14.

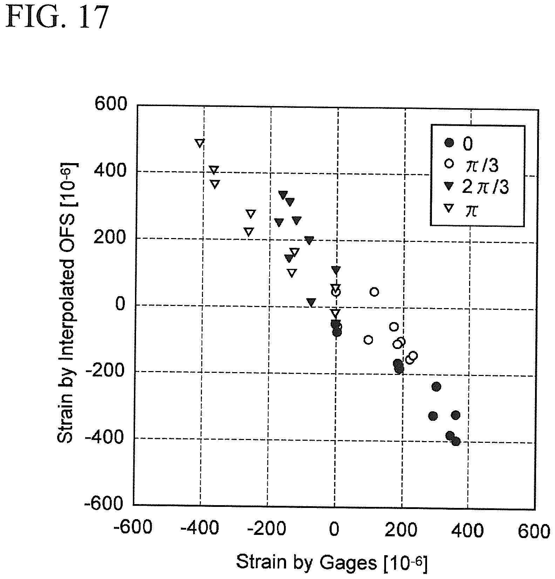

Next, the measured strain distribution data of the strain gauge 16 and the interpolated strain distribution data of the optical fiber sensor 17 are compared. FIG. 17 shows the compared result of each the strain distribution data under the conditions 1. In FIG. 17, the measured strain distribution data of the strain gauge 16 in each oscillation period and the interpolated strain distribution data of the optical fiber sensor 17 are plotted on the same graph. In FIG. 17, the horizontal axis shows the measured strain distribution data of the strain gauge 16, and the vertical axis shows the interpolated strain distribution data of the optical fiber sensor 17.

As shown in FIG. 17, the measured strain distribution data of the strain gauge 16 and the interpolated strain distribution data of the optical fiber sensor 17 are inversely proportional. As described above, the sign of the value of the measured strain distribution data of the strain gauge 16 and the sign of the value of the measured strain distribution data of the optical fiber sensor 17 are opposite to each other. Therefore, it is understood that the interpolated strain distribution data of the optical fiber sensor 17 has sufficient accuracy from this relationship.

Next, in order to ascertain the interpolation accuracy of the interpolated strain distribution data of the optical fiber sensor 17, it is calculated that the correlation coefficient $R^2$ between the measured strain distribution data of the strain gauge 16 and the measured strain distribution data of the optical fiber sensor 17, and the correlation coefficient $R^2$ between the measured strain distribution data of the strain gauge 16 and the interpolated strain distribution data of the optical fiber sensor 17. The calculated results are shown in a table 4.

[Table 4]

| | the correlation coefficient $R^2$ between the measured strain distribution data of the strain gauge and the interpolated strain distribution data of the optical fiber sensor [Hz] | the correlation coefficient $R^2$ between the measured strain distribution data of the strain gauge and the measured strain distribution data of the optical fiber sensor [Hz] |
|---|---|---|
| conditions 1 | 0.912 | 0.772 |
| conditions 2 | 0.773 | 0.054 |
| conditions 3 | 0.713 | 0.072 |
| conditions 4 | 0.540 | 0.226 |

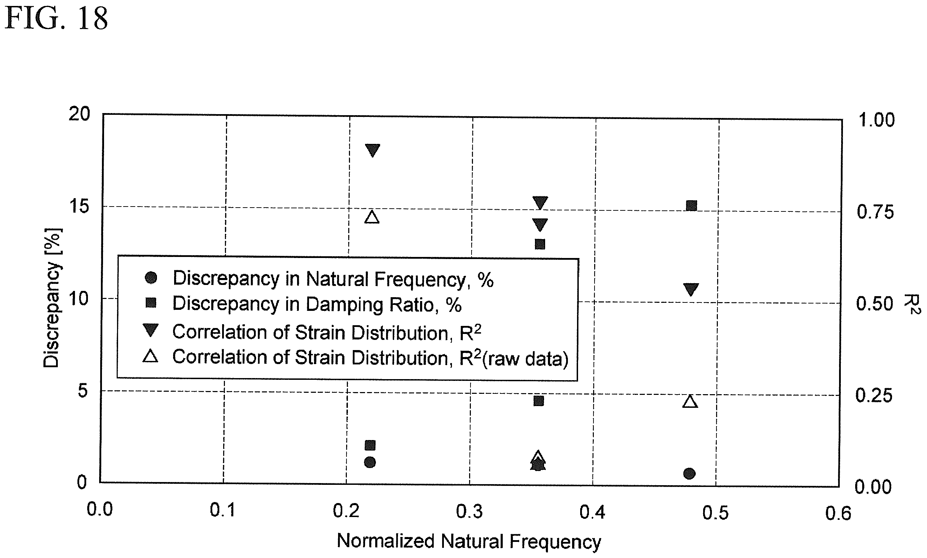

Further, the two correlation coefficients $R^2$, the discrepancy in natural frequency between the natural frequency based on the measured strain distribution data of the strain gauge 16 and the natural frequency based on the interpolated strain distribution data of the optical fiber sensor 17, and the discrepancy in the damping ratio between the damping ratio based on the measured strain distribution data of the strain gauge 16 and the damping ratio based on the measured strain distribution data of the optical fiber sensor 17 are plotted on FIG. 18. In FIG. 18, the horizontal axis shows the normalized natural frequency, the left vertical axis shows the discrepancy, and the right vertical axis shows the correlation coefficient $R^2$.

As shown in the table 4 and FIG. 18, the correlation between the interpolated strain distribution data of the optical fiber sensor 17 and the measured strain distribution data of the strain gauge 16 is higher than the measured strain distribution data of the optical fiber sensor 17. According to the relation, it is understood that the interpolated strain distribution data of the optical fiber sensor 17 has sufficient accuracy.

## Claims

1. A data processor comprising:

an acquirer (31) configured to acquire measured strain distribution data of a plurality of measured strain values which are measured by a distributed optical fiber sensor (2) having an optical fiber (21) attached to a measurement target (4) at a plurality of different positions over the optical fiber (21) at a plurality of different times;
an interpolator (32) configured to interpolate the positions and the times of the measured strain distribution data acquired by the acquirer (31), and to calculate an interpolated distribution of strains of the optical fiber (21) over time and position at a predetermined time interval and a predetermined position interval, to obtain each time-based set of the calculated strains at a respective point of time and at the plurality of different positions at the predetermined position interval over the optical fiber (21), and to obtain each position-based set of the calculated strains at a respective position and at the plurality of different points of time at the predetermined time interval; and
a calculator (33) configured to calculate, from the interpolated distribution of strains, a temporal change of a distribution of strains of a measurement target (4) attached with the optical fiber (21), and to calculate, from the interpolated distribution of strains, a positional change of the distribution of strains of the measurement target (4) attached with the optical fiber (21).

2. A data processing method comprising:

acquiring measured strain distribution data of a plurality of measured strain values which are measured by a distributed optical fiber sensor (2) having an optical fiber (21) attached to a measurement target (4) at a plurality of different positions over the optical fiber (21) at a plurality of different times;
interpolating the positions and the times of the measured strain distribution data;

calculating an interpolated distribution of strains of the optical fiber (21) over time and position at a predetermined time interval and a predetermined position interval;

obtaining each time-based set of the calculated strains at a respective point of time and at the plurality of different positions at the predetermined position interval over the optical fiber (21);

obtaining each position-based set of the calculated strains at a respective position and at the plurality of different points of time at the predetermined time interval;

calculating, from the interpolated distribution of strains, a temporal change of a distribution of strains of a measurement target (4) attached with the optical fiber (21); and

calculating, from the interpolated distribution of strains, a positional change of the distribution of strains of the measurement target (4) attached with the optical fiber (21) .

## Patentansprüche

1. Datenprozessor, aufweisend:

eine Erfassungseinrichtung (31), die konfiguriert ist, um gemessene Spannungsverteilungsdaten einer Vielzahl von gemessenen Spannungswerten, welche durch einen verteilten Glasfasersensor (2) gemessen sind, der eine Glasfaser (21) aufweist, die an einem Messziel (4) an einer Vielzahl von verschiedenen Positionen über die Glasfaser (21) angebracht ist, zu einer Vielzahl von verschiedenen Zeitpunkten zu akquirieren;

eine Interpolationseinrichtung (32), die konfiguriert ist, um die Positionen und die durch die Erfassungseinrichtung (31) akquirierten Zeitpunkte der gemessenen Spannungsverteilungsdaten zu interpolieren, und um eine interpolierte Verteilung von Spannungen der Glasfaser (21) über die Zeit und die Position zu einem vorbestimmten Zeitintervall und einem vorbestimmten Positionsintervall zu berechnen, um jeden zeitbasierten Satz der berechneten Spannungen zu einem jeweiligen Zeitpunkt und an der Vielzahl von verschiedenen Positionen zu dem vorbestimmten Positionsintervall über die Glasfaser (21) zu erhalten, und um jeden positionsbasierten Satz der berechneten Spannungen an einer jeweiligen Position und zu der Vielzahl von verschiedenen Zeitpunkten zu dem vorbestimmten Zeitintervall zu erhalten; und

eine Berechnungseinrichtung (33), die konfiguriert ist, um eine zeitliche Änderung einer Verteilung von Spannungen eines Messziels (4), das an der Glasfaser (21) angebracht ist, aus der interpolierten Verteilung von Spannungen zu berechnen, und um eine Positionsänderung der Verteilung von Spannungen des Messziels (4), das an der Glasfaser (21) angebracht ist, aus der interpolierten Verteilung von Spannungen zu berechnen.

2. Datenverarbeitungsverfahren, aufweisend:

Akquirieren von gemessenen Spannungsverteilungsdaten einer Vielzahl von gemessenen Spannungswerten, welche durch einen verteilten Glasfasersensor (2) gemessen sind, der eine Glasfaser (21) aufweist, die an einem Messziel (4) an einer Vielzahl von verschiedenen Positionen über die Glasfaser (21) angebracht ist, zu einer Vielzahl von verschiedenen Zeitpunkten;

Interpolieren der Positionen und der Zeitpunkte der gemessenen Spannungsverteilungsdaten;

Berechnen einer interpolierten Verteilung von Spannungen der Glasfaser (21) über die Zeit und die Position zu einem vorbestimmten Zeitintervall und einem vorbestimmten Positionsintervall;

Erhalten jedes zeitbasierten Satzes der berechneten Spannungen zu einem jeweiligen Zeitpunkt und an der Vielzahl von verschiedenen Positionen zu dem vorbestimmten Positionsintervall über die Glasfaser (21);

Erhalten jedes positionsbasierten Satzes der berechneten Spannungen an einer jeweiligen Position und zu der Vielzahl von verschiedenen Zeitpunkten zu dem vorbestimmten Zeitintervall;

Berechnen einer zeitlichen Änderung einer Verteilung von Spannungen eines Messziels (4), das an der Glasfaser (21) angebracht ist, aus der interpolierten Verteilung von Spannungen; und

Berechnen einer Positionsänderung der Verteilung von Spannungen des Messziels (4), das an der Glasfaser (21) angebracht ist, aus der interpolierten Verteilung von Spannungen.

## Revendications

1. Processeur de données comprenant :

un acquéreur (31) configuré pour acquérir des données de distribution de déformation mesurée d'une pluralité de valeurs de déformation mesurée qui sont mesurées par un capteur à fibres optiques distribuées (2) ayant une fibre optique (21) attachée à une cible de mesure (4) à une pluralité de positions différentes sur la fibre optique (21) à une pluralité de temps différents ;

un interpolateur (32) configuré pour interpoler les positions et les temps des données de distribution de déformation mesurée acquises par l'acquéreur (31), et pour calculer une distribution interpolée de déformations de la fibre optique (21) dans le temps et à une position à un intervalle de temps prédéterminé et un intervalle de position prédéterminé, pour obtenir chaque ensemble à base de temps des déformations calculées à un instant respectif et à la pluralité de positions différentes à l'intervalle de position prédéterminé sur la fibre optique (21), et pour obtenir chaque ensemble à base de position des déformations calculées à une position respective et à la pluralité d'instants différents à l'intervalle de temps prédéterminé ; et

un calculateur (33) configuré pour calculer, à partir de la distribution interpolée de déformations, un changement temporel d'une distribution de déformations d'une cible de mesure (4) attachée avec la fibre optique (21), et pour calculer, à partir de la distribution interpolée de déformations, un changement positionnel de la distribution de déformations de la cible de mesure (4) attachée avec la fibre optique (21).

2. Procédé de traitement de données comprenant :

l'acquisition de données de distribution de déformation mesurée d'une pluralité de valeurs de déformation mesurée qui sont mesurées par un capteur à fibres optiques distribuées (2) ayant une fibre optique (21) attachée à une cible de mesure (4) à une pluralité de positions différentes sur la fibre optique (21) à une pluralité de temps différents ;

l'interpolation des positions et des temps des données de distribution de déformation mesurée ;

le calcul d'une distribution interpolée de déformations de la fibre optique (21) dans le temps et à une position à un intervalle de temps prédéterminé et un intervalle de position prédéterminé ;

l'obtention de chaque ensemble à base de temps des déformations calculées à un instant respectif et à la pluralité de positions différentes à l'intervalle de position prédéterminé sur la fibre optique (21) ;

l'obtention de chaque ensemble à base de position des déformations calculées à une position respective et à la pluralité d'instants différents à l'intervalle de temps prédéterminé ;

le calcul, à partir de la distribution interpolée de déformations, d'un changement temporel d'une distribution de déformations d'une cible de mesure (4) attachée avec la fibre optique (21) ; et

le calcul, à partir de la distribution interpolée de déformations, d'un changement positionnel de la distribution de déformations de la cible de mesure (4) attachée avec la fibre optique (21).

FIG. 1

EP 3 187 821 B1

# FIG. 2

STRAIN DISTRIBUTION DATA PROCESSOR ~3

| ACQUIRER | ~31 |

| INTERPOLATOR | ~32 |

| CALCULATOR | ~33 |

| OUTPUT UNIT | ~34 |

FIG. 3

FIG. 4

FIG. 5A

FIG. 5B

FIG. 5C

FIG. 6A

16    14

FIG. 6B

18(17)    14

EP 3 187 821 B1

FIG. 7

FIG. 8A

FIG. 8B

EP 3 187 821 B1

FIG. 9

## FIG. 10A

## FIG. 10B

# FIG. 11

FIG. 12A

FIG. 12B

## FIG. 13A

## FIG. 13B

## FIG. 13C

FIG. 14A

FIG. 14B

FIG. 14C

## FIG. 15A

## FIG. 15B

## FIG. 15C

FIG. 16A

FIG. 16B

FIG. 16C

FIG. 17

FIG. 18

EP 3 187 821 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2015256344 A
- US 2010040108 A1

- US 2008145049 A1

### Non-patent literature cited in the description

- *The Optical Fiber Sensors Guide - Fundamentals & Applications -, Micron Optics, http://www.micronoptics.com/wp-content/uploads/2015/06/Updated Optical Fiber Se nsors Guide 130529.pdf*

- Highly dense strain measurement of concrete retrofitted with smart fabric. **IMAI M et al.** NONDESTRUCTIVE CHARACTERIZATION FOR COMPOSITE MATERIALS, AEROSPACE ENGINEERING, CIVIL INFRASTRUCTURE, AND HOMELAND SECURITY 2011. SPIE, 24 March 2011, vol. 7983, 1-15
- **LAM, NINA SIU-NGAN.** Spatial Interpolation Methods: A Review. The American Cartographer, 1983, vol. 10.2, 129-150